# EUROPEAN PATENT SPECIFICATION

(11) **EP 0 915 663 B1**
(45) Date of publication and mention of the grant of the patent: **13.02.2002**
(21) Application number: 97931786.4
(22) Date of filing: 07.07.1997
(51) Int. Cl.: A23G 9/02

(54) **COATED ICE CONFECTION**
UMHÜLLTE SPEISEEISWAREN
CONFISERIE GLACEE POURVUE D'UN REVETEMENT

(30) Priority: 30.07.1996 US 688182
(43) Date of publication of application: 19.05.1999
(73) Proprietor: SOCIETE DES PRODUITS NESTLE S.A., 1800 Vevey (CH)
(72) Inventor: NALUR, Shantha, Chandrasekaran, Dublin, OH 43017 (US)
(74) Representative: Pate, Frederick George
(86) International application number: EP9703566
(87) International publication number: WO9804144

(56) References cited:
- EP-A- 0 465 801
- EP-A- 0 530 014
- WO-A-95/21536
- WO-A-96/26652
- GB-A- 187 919
- US-A- 3 561 981
- US-A- 4 603 051
- US-A- 4 985 263
- US-A- 5 085 877
- US-A- 5 401 518
- US-A- 5 500 233

## Description

### FIELD OF THE INVENTION

The present invention relates to a coated ice confection and to the production thereof more particularly to an ice confection coated with an edible fat-based compound.

### BACKGROUND OF THE INVENTION

Cracking and non-adherence of the coating of ice cream bars during consumption is one of the major causes for complaints from consumers because this is not only messy but also it prevents the consumer from eating the entire coated product. The examination of store purchased coated ice creams showed that cracking had occurred and that a significant percentage of the coating had fallen off. The cracking of the coating could be due to several reasons such as ice cream shrinkage, temperature abuse or the composition of the ice cream and the coating, and may also be due to poor adhesion of the coating to the ice cream.

Methods for improving the adhesion of fat-based coatings to ice confections using a precoating or interface layer between the ice confection and the edible fat-based coating have been proposed. For example, WO91/01649 discloses a method for enhancing the adherence of coatings to frozen fat-based confections such as ice cream comprising applying a composition to the surface of a frozen fat-based confection as an interface layer between said frozen fat-based confection and said coating, wherein the interface layer composition comprises an effective amount of an edible polysaccharide, e.g. maltodextrin, in an aqueous solution, to enhance the adherence of said coating to said confection. WO95/21536 discloses an ice confection having a couverture layer on at least part of its surface, the layer including a first, inner, precoating layer. The precoating layer may have a similar or a different composition to the outer couverture layer and contains from about 25% to about 100% fat.

### SUMMARY OF THE INVENTION

I have found, surprisingly, that excellent adhesion between the ice confection and the edible fat-based coating can be achieved at relatively low cost by precoating the ice confection with an edible emulsifier containing hydrophilic and hydrophobic moieties.

Accordingly, the present invention provides an ice confection comprising an ice confection core, a fat-based outer coating layer and an edible emulsifier containing hydrophilic and hydrophobic moieties as a precoating layer between the ice confection core and the edible fat-based outer coating layer.

### DETAILED DESCRIPTION OF THE INVENTION

The ice confection may be milk- or fat-based and may be, for instance, yoghurt, ice milk or a frozen dessert. However, the invention is particularly suitable when the ice confection is ice cream. The edible fat-based outer coating layer may be based on vegetable fat and may include any kind of coating with fat as the continuous phase, for example, dark, milk or white chocolate or compound coatings containing vegetable fats or various substitutes such as direct cocoa butter replacements, stearines, coconut oil, palm oil, butter or any mixture thereof.

The edible emulsifier may be natural, e.g. hydrolysed milk protein or lecithin, or it may be synthetic, e.g. hydroxylated lecithin; a stearoyl-lactylate such as sodium stearoyl - 2 - lactylate; a mono- or di-glyceride of an edible fatty acid or an ester thereof with citric, diacetyl-tartaric, acetic, lactic or teartaric acid; a polyglyceric ester of an edible fatty acid; an ester of an edible fatty acid of propylene glycol; a sucroester or a sucroglyceride; ammonium phosphatide;alginate protonal esters. The amount of emulsifier may be from 0.01 to 1.0% and preferably from 0.025 to 0.05% by weight based on the total weight of the ice confection. The edible emulsifier is advantageously used in an aqueous medium in which some emulsifiers form an emulsion and other emulsifiers form a colloidal suspension. The concentration of the edible emulsifier in the aqueous medium may be from 0.1 to 5%, preferably from 0.2 to 2.5% and especially from 0.25 to 1.5% by weight. Although the edible emulsifier should be capable of forming a precoating layer which is undetectable when eating, i.e. it is white or colourless and tasteless, a flavour or colour may be added to the edible emulsifier, if desired.

The present invention also provides a method for improving the adhesion of a fat-based coating to an ice confection which comprises applying an edible emulsifier containing hydrophilic and hydrophobic moieties to the surface of the ice confection to form a precoating layer and the applying the fat-based coating to the precoating layer.

The precoating may conveniently be applied to the ice confection by dipping, spraying, or enrobing. The fat-based coating may be applied to the precoating layer in a similar manner, usually within a period of from 1 to 60 minutes and preferably from 5 to 30 minutes after the application of the precoating. The fat-based coating should be flowable and coatable at the temperature at which it is applied which may be from 10° to 35°C and more usually from 15° to 30°C. If the temperature is too low, the coating may not flow and if the temperature is too high, e.g. 40°C, the coating may dissolve the emulsifier precoating and tend to slip off the ice cream without coating it properly. Typically, the plastic viscosity of the fat-based coating is from 0.2 - 0.4 Pa·s (2 to 4 poise) although in some cases it may be higher, and the yield value is preferably from 4 to 7 dynes /cm2.

The edible emulsifier is advantageously applied in an aqueous medium, usually in the form of an emulsion or a colloidal suspension depending on the nature of the emulsifier, at a concentration from 0.1 to 5%, preferably from 0.2 to 2.5% and especially from 0.25 to 1.5% by weight

### EXAMPLES

The following Examples further illustrate the present invention.

### Examples 1 to 5

Moulded ice cream centres (80% overrun) supported on a stick are made and maintained at -20°C to -30°C. The bars weigh between 42-44g each. These bars are dipped into an aqueous emulsion (Example 1) or a colloidal suspension (Examples 2-5) of the Precoat at 4°C and immediately cooled to and maintained at -20°C to -30°C. The emulsifiers used for the Precoat and their concentrations are shown in Table 1.

**TABLE 1**

| EXAMPLE | PRECOAT | TRADE NAME | % IN WATER |
|---|---|---|---|
| 1 | Hydroxylated lecithin | Yelkin 1018 | 1.0% |
| 2 | Sodium stearoyl-2-lactylate | Paniplex | 0.5% |
| 3 | Sodium stearoyl-2-lactylate | Paniplex | 1.0% |
| 4 | Hydrolysed milk protein | HMP-500 | 0.5% |
| 5 | Hydrolysed milk protein | HMP-500 | 1.0% |

After 20 minutes, these bars (at -20°C to -30°C) are dipped into a coating having the composition shown in Table 2 maintained at 20°C. The plastic viscosity is 0.3 Pa·s (3 poise) and the yield value is 5 dynes/cm2.

**TABLE 2**

| INGREDIENT | PERCENTAGE |
|---|---|
| | |
| COCOA LIQUOR | 10.9 |
| SUGAR | 31.0 |
| SWEET WHEY | 9.8 |
| COCONUT OIL (M.P.24.5°C) | 32 |
| VANILLIN | 0.03 |
| ANHYDROUS BUTTER FAT | 4.0 |
| HYDROGENATED SOYA OIL | 11.77 |
| LECITHIN | 0.5 |

The following tests were used to evaluate the cracking of the coating:
1. Adherence Test: The coating was manually peeled from the ice cream center and visually observed to see if any ice cream was sticking to it.
2. Instron Test to assess cracking: The cracking test was performed with Instron Model 1122 equipped with a temperature controlled cabinet. A blade 0.182 cm (0.075 inch thickness) having a tapered edge was used to impact the bars. The temperature of the cabinet was maintained at -4°C using liquid carbon dioxide. The blade speed was varied from 2.54 cm/min (1 inch/min). to 25.4 cm/min (10 inch/min). and the distance of travel through the bar was 10mm. The extent of cracking was observed visually.

The adherence of the coating was significantly superior to and the degree of cracking was significantly less than those of a control coated ice cream bar without a precoat.

### Examples 6 to 13

Moulded ice cream centres were treated as in Examples 1 to 5 except that they were dipped into the precoats shown in Examples 6 to 13 of Table 3 at a concentration in water of 1%. In Comparative Examples A and B of Table 3 controls were made with single and double coatings having the composition of Table 2 but without a precoat.

Evaluation of Cracking was carried out using a Texture Analyzer: A TA.XT2 analyzer equipped with XTRAD software was used to count the number of cracks of the Ice Cream Coating. A TA-47 blade was used at a speed of 0.5 mm/sec to a distance of 5 mm with a trigger force of 10 grams and a post test speed of 10 mm/sec. A single test was performed per ice cream bar and 3 tests were run for each treatment. A force threshold of 30 g was selected and the number of peaks (represents cracking) were counted.

The cracking of the ice cream coatings as measured by Texture Analyzer TA.XT2 is shown in Table 3.

**TABLE 3**

| Example | Treatments (precoats at 1% concentration) | No. of Peaks¹ obtained using TA.XT2* |
|---|---|---|
| | | |
| A | Control, single coating (no precoat) | 12 |
| B | Double coating (no precoat) | 10 |
| 6 | Lecithin precoat | 8 |
| 7 | Hydroxylated lecithin precoat | 6.3 |
| 8 | Sodium Stearoyl -2- lactylate precoat | 5.3 |
| 9 | Mono, and Di- glyceride precoat | 7 |
| 10 | Sorbitan Tristearate precoat | 8 |
| 11 | Ammoniun Phosphatide precoat | 8.3 |
| 12 | Hydrolyzed Milk Protein pre coat | 9 |
| 13 | Alginate protonal esters precoat | 5.3 |

| | | |
|---|---|---|
| *Average of 3 determinations. | | |
| ¹The number of peaks represents the number of cracks on the ice cream coating. | | |

## Claims

1. An ice confection comprising an ice confection core, a fat-based outer coating layer and an edible emulsifier containing hydrophilic and hydrophobic moieties as a precoating layer between the ice confection core and the edible fat-based outer coating layer.

2. An ice confection according to claim 1 wherein the ice confection is ice cream.

3. An ice confection according to claim 1 wherein the edible fat-based outer coating layer is based on vegetable fat.

4. An ice confection according to claim 1 wherein the edible fat-based outer coating layer is dark, milk or white chocolate or compound coatings containing vegetable fats or direct cocoa butter replacements, stearines, coconut oil, palm oil, butter or any mixture thereof.

5. An ice confection according to claim 1 wherein the edible emulsifier is natural or synthetic.

6. An ice confection according to claim 1 wherein the edible emulsifier is hydrolysed milk protein, hydroxylated lecithin or sodium stearoyl- 2- lactylate.

7. An ice confection according to claim 1 wherein the amount of the edible emulsifier is from 0.01 to 1.0% by weight based on the total weight of the ice confection.

8. A method for improving the adhesion of a fat-based coating to an ice confection which comprises applying an edible emulsifier containing hydrophilic and hydrophobic moieties to the surface of the ice confection to form a precoating layer and the applying the fat-based coating to the precoating layer.

9. A method according to claim 8 wherein the edible emulsifier is applied in an aqueous medium at a concentration from 0.1 to 5 by weight.

10. A method according to claim 8 wherein the precoating is applied to the ice confection by dipping, spraying, or enrobing.

11. A method according to claim 8 wherein the fat-based coating is applied to the precoating layer within a period of from 1 to 60 minutes after the application of the precoating.

12. A method according to claim 8 wherein the fat-based coating is applied at a temperature from 10° to 35°C.

## Patentansprüche

1. Speiseeis-Konfekt welches umfasst, einen Kern aus Speiseeis-Konfekt, eine äußere Überzugsschicht auf Fettbasis und einen genießbaren Emulgator mit hydrophilen und hydrophoben Resten, der als Precoat-Schicht zwischen dem Kern aus Speiseeis-Konfekt und der genießbaren äußeren Überzugsschicht auf Fettbasis vorliegt.

2. Speiseeis-Konfekt nach Anspruch 1, worin das Speiseeis-Konfekt Speiseeis ist.

3. Speiseeis-Konfekt nach Anspruch 1, worin die genießbare äußere Überzugsschicht auf Fettbasis Pflanzenfett als Grundlage hat.

4. Speiseeis-Konfekt nach Anspruch 1, worin die genießbare äußere Überzugsschicht auf Fettbasis dunkle, Milch- oder weiße Schokolade oder Gemisch-Überzüge ist, die Pflanzenfette oder Direkt-Ersatzstoffe für Kakaobutter, Stearine, Kokosnuss-Fett, Palmfett, Butter oder ein Gemisch davon enthalten.

5. Speiseeis-Konfekt nach Anspruch 1, worin der genießbare Emulgator natürlich oder synthetisch ist.

6. Speiseeis-Konfekt nach Anspruch 1, worin der genießbare Emulgator hydrolysiertes Milchprotein, hydroxyliertes Lecithin oder Natriumstearoyl-2-lactylat ist.

7. Speiseeis-Konfekt nach Anspruch 1, worin die Menge an dem genießbaren Emulgator 0,01 bis 1,0 Gew.-%, bezogen auf das Gesamtgewicht des Speiseeis-Konfekts, beträgt.

8. Verfahren zur Verbesserung des Haftvermögens eines Überzugs auf Fettbasis an einem Speiseeis-Konfekt, welches Auftragen eines genießbaren Emulgators mit hydrophilen und hydrophoben Resten auf die Oberfläche des Speiseeis-Konfekts, um eine Precoat-Schicht zu bilden, und Auftragen des Überzugs auf Fettbasis auf die Precoat-Schicht umfasst.

9. Verfahren nach Anspruch 8, worin der genießbare Emulgator in einem wässerigen Medium in einer Konzentration von 0,1 bis 5 Gew.-% aufgetragen wird.

10. Verfahren nach Anspruch 8, worin die Precoat-Schicht durch Tauchen, Sprühen oder Umhüllen auf das Speiseeis-Konfekt aufgetragen wird.

11. Verfahren nach Anspruch 8, worin der Überzug auf Fettbasis auf die Precoat-Schicht in einer Zeitspanne von 1 bis 60 Minuten nach Auftrag der Precoat-Schicht aufgetragen wird.

12. Verfahren nach Anspruch 8, worin der Überzug auf Fettbasis bei einer Temperatur von 10° bis 35°C aufgetragen wird.

## Revendications

1. Produit de confiserie glacé comprenant un noyau de produit de confiserie glacé, une couche d'enrobage extérieure à base de matières grasses et un émulsionnant comestible contenant des groupements hydrophiles et des groupements hydrophobes comme couche de préenrobage entre le noyau de la confiserie glacée et la couche d'enrobage extérieure à base de matières grasses comestibles.

2. Produit de confiserie glacé suivant la revendication 1, qui consiste en une crème glacée.

3. Produit de confiserie glacé suivant la revendication 1, dans lequel la couche d'enrobage extérieure à base de matières grasses comestibles est à base d'une matière grasse végétale.

4. Produit de confiserie glacé suivant la revendication 1, dans lequel la couche d'enrobage extérieure à base de matières grasses comestibles est constituée de chocolat noir, de chocolat au lait ou de chocolat blanc ou d'enrobages mixtes contenant des matières grasses végétales ou des produits de remplacement directs du beurre de cacao, des stéarines, l'huile de coprah, l'huile de palme, le beurre ou n'importe lequel de leurs mélanges.

5. Produit de confiserie glacé suivant la revendication 1, dans lequel l'émulsionnant comestible est naturel ou synthétique.

6. Produit de confiserie glacé suivant la revendication 1, dans lequel l'émulsionnant comestible consiste en protéine laitière hydrolysée, lécithine hydroxylée ou stéaroyl-2-lactylate de sodium.

7. Produit de confiserie glacé suivant la revendication 1, dans lequel la quantité de l'émulsionnant comestible est comprise dans l'intervalle de 0,01 à 1,0 % en poids sur la base du poids total du produit de confiserie glacé.

8. Procédé pour améliorer l'adhérence d'un enrobage à base de matières grasses à un produit de confiserie glacé, qui comprend l'application d'un émulsionnant comestible contenant des groupements hydrophiles et des groupements hydrophobes à la surface du produit de confiserie glacé pour former une couche de préenrobage, et l'application de l'enrobage à base de matières grasses à la couche de préenrobage.

9. Procédé suivant la revendication 8, dans lequel l'émulsionnant comestible est appliqué dans un milieu aqueux à une concentration de 0,1 à 5 % en poids.

10. Procédé suivant la revendication 8, dans lequel le préenrobage est appliqué au produit de confiserie glacé par immersion, pulvérisation ou enrobage.

11. Procédé suivant la revendication 8, dans lequel l'enrobage à base de matières grasses et appliqué à la couche de préenrobage en un temps de 1 à 60 minutes après l'application du préenrobage.

12. Procédé suivant la revendication 8, dans lequel l'enrobage à base de matières grasses est appliqué à une température de 10° à 35°C.
